# EUROPEAN PATENT APPLICATION

(11) **EP 3 496 506 A1**
(43) Date of publication of application: **12.06.2019**
(21) Application number: 16911553.2
(22) Date of filing: 03.08.2016
(51) Int. Cl.: H04W 80/10, H04W 88/16

(54) **RADIO COMMUNICATION NETWORK, MOBILITY MANAGEMENT ENTITY, LOCAL GATEWAY, AND CONTROL PLANE NODE**

(71) Applicant: NEC Corporation, Tokyo 108-8001 (JP)
(72) Inventor: IWAI, Takanori, Tokyo 108-8001 (JP); TAMURA, Toshiyuki, Tokyo 108-8001 (JP); SUZUKI, Naoaki, Tokyo 108-8001 (JP)
(74) Representative: MacDougall, Alan John Shaw
(86) International application number: PCT/JP2016/003584
(87) International publication number: WO 2018/025291

(57) **Abstract**

A radio communication network includes: a control plane (C-plane) node (24) located in a core network (20); a local gateway (14) located in a Radio Access Network (RAN) (10) including a base station (11). The C-plane node (24) has a C-plane of a PDN gateway and provides a first C-plane interface for communicating with a PCC entity relating to Policy and Charging Control (PCC). The local gateway (14) has a user plane of a PDN gateway and provides IP connectivity to the base station (11) to offload a particular type of traffic. The local gateway (14) further provides a second control plane interface for communicating with the C-plane node (24).

## Description

### Technical Field

The present disclosure relates to a radio communication network and, in particular, to traffic offloading in a Radio Access Network (RAN).

### Background Art

Non Patent Literature 1 discloses techniques standardized by the Third Generation Partnership Project (3GPP) for traffic offloading in RAN. The traffic offloading means a technique for enabling sending of user plane (U-plane) data traffic directly to the Internet or another Internet Protocol (IP) network while bypassing a core network (i.e., Evolved Packet Core (EPC)). The main techniques standardized by the 3GPP for traffic offloading are Local IP Access (LIPA) and Selected IP Traffic Offload (SIPTO).

The LIPA is a technique related to Home eNodeBs (HeNBs). The LIPA enables an IP capable User Equipment (UE) connected via a HeNB to access other IP capable entities in the same residential/enterprise IP network without the user plane traversing the core network (EPC). The LIPA is achieved by use of a Local Gateway (LGW) collocated with the HeNB. The LIPA is established by the UE requesting a new Packet Data Network (PDN) connection to an Access Point Name (APN) for which the LIPA is permitted and the network selecting the LGW associated with the HeNB and enabling a direct U-plane path between the LGW and the HeNB. The HeNB supporting the LIPA sends the LGW address to a Mobility Management Entity (MME) within the EPC, via every INITIAL UE MESSAGE and every UPLINK NAS TRANSPORT message. The LGW address sent by the HeNB is used for selection of a PDN Gateway (PGW) by the MME.

The SIPTO enables traffic offloading not only from HeNBs but also from eNodeBs (eNBs). The SIPTO includes "SIPTO above RAN" architecture and "SIPTO at the Local Network" architecture. The "SIPTO above RAN" architecture corresponds to a traffic offload through a PGW located in the mobile operator's core network (EPC). In contrast, the "SIPTO at the Local Network" architecture corresponds to a traffic offload through an LGW located in the RAN.

The SIPTO at the Local Network function enables an IP capable UE connected via a (H)eNB to access a defined IP network (e.g., the Internet) without the user plane traversing the core network (EPC). The SIPTO at the Local Network can be achieved by selecting an LGW function collocated with the (H)eNB or selecting a stand-alone GW residing in a local network. In any of "SIPTO at the Local Network with stand-alone GW" and "SIPTO at the Local Network with L-GW collocated with the (H)eNB", selected IP traffic is offloaded via the local network. Note that, the local network is synonymous with a Local Home Network (LHN). The local home network is a network composed of an LGW and at least one (H)eNB that has IP connectivity provided by the LGW.

In the SIPTO at the Local Network with stand-alone GW, a stand-alone GW can be used to provide IP connectivity to a plurality of (H)eNBs. The stand-alone GW is located in the local network, and it has both the functionality of Serving GW (SGW) and the functionality of LGW. A (H)eNB supporting the SIPTO at the Local Network with stand-alone GW sends a Local Home Network (LHN) ID to a Mobility Management Entity (MME) within the EPC, via every INITIAL UE MESSAGE and every UPLINK NAS TRANSPORT message. The LHN ID sent by the (H)eNB is used for PGW selection and SGW selection by the MME.

In the SIPTO at the Local Network with L-GW collocated with the (H)eNB, an LGW can be used to provide IP connectivity to the (H)eNB collocated with the LGW. The (H)eNB supporting the SIPTO at the Local Network with L-GW collocated with the (H)eNB sends the LGW address to the MME within the EPC, via every INITIAL UE MESSAGE and every UPLINK NAS TRANSPORT message. Similar to the case of the LIPA, the LGW address sent by the (H)eNB is used for PGW selection by the MME.

Note that, in the LIPA and the SIPTO at the Local Network, an interface between the LGW and the Policy and Charging Rule Function (PCRF) is not defined. Thus, data communication using dedicated bearers is not supported due to unavailability of the policy control on the PDN connection used for the LIPA and the SIPTO at the Local Network. Further, in the LIPA and the SIPTO at the Local Network, interfaces between an LGW and an Online Charging System (OCS) and between an LGW and an Offline Charging System (OFCS) are not defined. Thus, the charging control on the communication services performed in the LIPA and the SIPTO at the Local Network is not supported.

Next, C/U split (or separation) of core network nodes (i.e., EPC nodes) currently discussed by the 3GPP is described. Non Patent Literature 2 discloses that the U-plane functionality of EPC nodes (i.e., SGW, PDN GW (PGW) and Traffic Detection Function (TDF)) is separated from the control plane (C-plane) functionality of them.

### Citation List

### Non Patent Literature

Patent Literature 1: 3GPP TS 23.401 V13.7.0 (2016-06), "3rd Generation Partnership Project; Technical Specification Group Services and System Aspects; General Packet Radio Service (GPRS) enhancements for Evolved Universal Terrestrial Radio Access Network (E-UTRAN) access (Release 13)", June 2016
Patent Literature 2: 3GPP TR 23.714 V14.0.0 (2016-06), "3rd Generation Partnership Project; Technical Specification Group Services and System Aspects; Study on control and user plane separation of EPC nodes (Release 14)", June 2016

### Summary of Invention

### Technical Problem

As described above, in the existing LIPA and SIPTO at the Local Network, the LGW has no interface for communicating with a PCRF. The LGW also has no interface for communicating with other entities (i.e., OCS and OFCS) relating to the Policy and Charging Control (PCC). In such architectures, it is difficult for mobile operators to provide Quality of Service (QoS) guarantee and to perform charging control on the traffic that is offloaded at the RAN.

The present inventors focused on the fact that, with the emergence of new network architectures and new communication service needs, the QoS guarantee, or the charging control, or both are likely to be needed in the future even in the case of the traffic offloading at the RAN including the LIPA and the SIPTO at the Local Network. An example of these new network architectures is Mobile Edge Computing (MEC).

The European Telecommunications Standards Institute (ETSI) has started standardization of the MEC. The MEC offers, to application developers and content providers, cloud-computing capabilities and an information technology (IT) service environment in the RAN in close proximity to mobile subscribers. This environment provides ultra-low latency and high bandwidth as well as direct access to radio network information (subscriber's location, cell load etc.) that can be leveraged by applications and services. The MEC server is integrally arranged with a RAN node. Specifically, the MEC server can be deployed at a Long Term Evolution (LTE) base station (eNodeB) site, a 3G Radio Network Controller (RNC) site, or a multi-technology cell aggregation site.

It is currently discussed that MEC is applied to Vehicle-to-Everything (V2X) services. V2X includes Vehicle-to-Vehicle (V2V) communication, Vehicle-to-Infrastructure (V2I) communication, Vehicle-to-network (V2N) communication, and Vehicle-to-Pedestrian (V2P) communication. Various use cases of V2X include many safety-related use cases and many latency-sensitive use cases. Accordingly, QoS-guaranteed data transmission is required when offloading techniques, such as the LIPA and the SIPTO at the Local Network, are used to offload the traffic regarding MEC for V2X services at the RAN.

However, if the LGW located in the RAN has an interface for communicating with a PCC entity, such as the PCRF, it could cause an excessive increase in load on the LGW. For example, the Gx and Gy interfaces use the Diameter protocol. The Diameter protocol is a stateful protocol and uses the Stream Control Transmission Protocol (SCTP) or the Transmission Control Protocol (TCP), and thus requires periodic message exchange between two nodes (Device-Watchdog-Request and Device-Watchdog-Answer). Accordingly, if the LGW has the Gx interface, or the Gy interface, or both, the load on the LGW could increase significantly.

In view of the above, one object to be attained by embodiments disclosed herein is to provide several improvements that contribute to allowing a PCC rule to be applied to an LGW without an excessive increase in load on the LGW. It should be noted that the above-described object is merely one of the objects to be attained by the embodiments disclosed herein. Other objects or problems and novel features will be made apparent from the following descriptions and the accompanying drawings.

### Solution to Problem

In an aspect, a radio communication network includes a first control plane node located in a core network and a local gateway located in a Radio Access Network (RAN) including a base station. The first control node includes a control plane of a Packet Data Network (PDN) gateway. The first control node is configured to provide a first control plane interface for communicating with at least one of a plurality of PCC entities relating to Policy and Charging Control (PCC). The local gateway includes a PDN gateway user plane and is configured to provide Internet Protocol (IP) connectivity to the base station to offload a particular type of traffic. The local gateway is further configured to provide a second control plane interface for communicating with the first control plane node.

In an aspect, a mobility management entity located in a core network includes at least one memory and at least one processor coupled to the at least one memory. The at least one processor is configured to perform Packet Data Network (PDN)-gateway selection during a session establishment procedure for a particular type of traffic to be offloaded at a local gateway. The local gateway is located in a Radio Access Network (RAN) including a base station, has a PDN-gateway user plane, and is configured to provide Internet Protocol (IP) connectivity to the base station to offload the particular type of traffic. The PDN gateway selection includes, when a split between a PDN-gateway control plane and a PDN-gateway user plane is applied to the local gateway with regard to an Access Point Name (APN) associated with the particular type of traffic, selecting a first control plane node that is located in the core network and has a PDN-gateway control plane.

In an aspect, a method in a mobility management entity located in a core network includes performing Packet Data Network (PDN)-gateway selection during a session establishment procedure for a particular type of traffic to be offloaded at a local gateway. The local gateway is located in a Radio Access Network (RAN) including a base station, has a PDN-gateway user plane, and is configured to provide Internet Protocol (IP) connectivity to the base station to offload the particular type of traffic. The PDN gateway selection includes, when a split between a PDN-gateway control plane and a PDN-gateway user plane is applied to the local gateway with regard to an Access Point Name (APN) associated with the particular type of traffic, selecting a first control plane node that is located in the core network and has a PDN-gateway control plane.

In an aspect, a local gateway located in a Radio Access Network (RAN) including a base station includes at least one memory and at least one processor coupled to the at least one memory. The at least one processor is configured to provide a Packet Data Network (PDN)-gateway user plane for communicating with an external Packet Data Network (PDN). The at least one processor is further configured to provide Internet Protocol (IP) connectivity to the base station to offload a particular type of traffic. The at least one processor is still further configured to provide a control plane interface for communicating with a control plane node located in a core network. The control plane node has a PDN-gateway control plane and also has a control plane interface for communicating with at least one of a plurality of PCC entities relating to Policy and Charging Control (PCC).

In an aspect, a method in a local gateway located in a Radio Access Network (RAN) including a base station includes:
(a) providing a Packet Data Network (PDN)-gateway user plane for communicating with an external Packet Data Network (PDN);
(b) providing Internet Protocol (IP) connectivity to the base station to offload a particular type of traffic; and
(c) providing a control plane interface for communicating with a control plane node located in a core network, where the control plane node has a PDN-gateway control plane and also has a control plane interface for communicating with at least one of a plurality of PCC entities relating to Policy and Charging Control (PCC).

In an aspect, a control plane node located in a core network includes at least one memory and at least one processor coupled to the at least one memory. The at least one processor is configured to provide a Packet Data Network (PDN)-gateway control plane. The at least one processor is further configured to provide a first control plane interface for communicating with at least one of a plurality of PCC entities relating to Policy and Charging Control (PCC). The at least one processor is still further configured to provide a control plane interface for communicating with a local gateway located in a Radio Access Network (RAN) including a base station. The local gateway comprises a PDN gateway user plane and provides Internet Protocol (IP) connectivity to the base station to offload a particular type of traffic.

In an aspect, a method in a control plane node located in a core network includes:
(a) providing a Packet Data Network (PDN)-gateway control plane;
(b) providing a first control plane interface for communicating with at least one of a plurality of PCC entities relating to Policy and Charging Control (PCC); and
(c) providing a control plane interface for communicating with a local gateway located in a Radio Access Network (RAN) including a base station, where the local gateway comprises a PDN gateway user plane and provides Internet Protocol (IP) connectivity to the base station to offload a particular type of traffic.

In an aspect, a program includes a set of instructions (software codes) that, when loaded into a computer, causes the computer to perform a method according to one of the above-described aspects.

### Advantageous Effects of Invention

According to the above aspects, it can provide an apparatus, a method, and a program that contribute to allowing a PCC rule to be applied to an LGW without an excessive increase in load on the LGW.

### Brief Description of Drawings

Fig. 1 is a diagram showing a configuration example of a radio communication network according to the first embodiment;
Fig. 2 shows a configuration example of a radio communication network according to the second embodiment;
Fig. 3 is a flowchart showing an example of an operation of an MME according to the third embodiment;
Fig. 4 is a flowchart showing an example of an operation of an MME according to the fourth embodiment;
Fig. 5 is a flowchart showing an example of an operation of an LGW (standalone GW) according to the fourth embodiment;
Fig. 6 is a flowchart showing an example of an operation of a PGW-C according to the fourth embodiment;
Fig. 7 is a flowchart showing an example of an operation of an MME according to the fifth embodiment;
Fig. 8 is a flowchart showing an example of an operation of an SGW (or SGW-C) according to the fifth embodiment;
Fig. 9 is a flowchart showing an example of an operation of a PGW-C according to the fifth embodiment;
Fig. 10 is a flowchart showing an example of an operation of an MME according to the sixth embodiment;
Fig. 11 is a flowchart showing an example of an operation of an MME according to the seventh embodiment;
Fig. 12 is a sequence diagram showing an example of a signaling procedure according to the eighth embodiment;
Fig. 13 is a sequence diagram showing an example of a signaling procedure according to the ninth embodiment; and
Fig. 14 is a block diagram showing a configuration example of a network node according to some embodiments.

### Description of Embodiments

Specific embodiments will be described hereinafter in detail with reference to the drawings. The same or corresponding elements are denoted by the same symbols throughout the drawings, and duplicated explanations are omitted as necessary for the sake of clarity.

The embodiments described below provide examples of improvements to traffic offloading in a RAN obtained by the inventors. These improvements include improvements on network architecture, improvements on network-node functionality (e.g., PGW selection by an MME), and improvements on an Attach procedure and a (UE-Requested) additional PDN connectivity procedure.

Each of the embodiments described below may be used individually, or two or more of the embodiments may be appropriately combined with one another. These embodiments include novel features different from each other. Accordingly, these embodiments contribute to attaining objects or solving problems different from one another and also contribute to obtaining advantages different from one another.

### First Embodiment

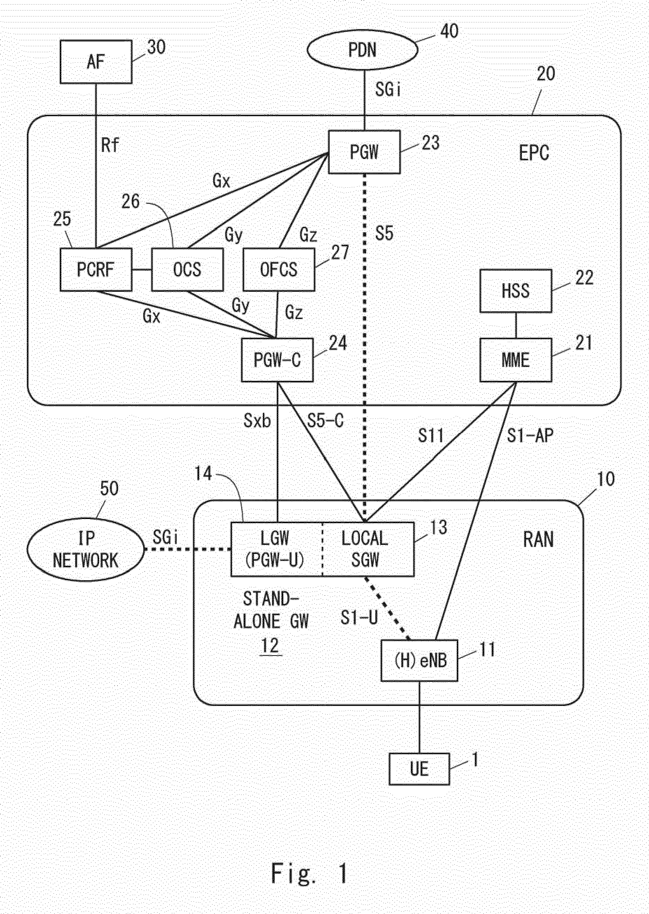

Fig. 1 shows a configuration example of a radio communication network according to this embodiment. This embodiment provides an improvement to the SIPTO at the Local Network with stand-alone GW architecture. In the example of Fig. 1, a RAN 10 includes a (H)eNB 11 and a stand-alone GW 12. The (H)eNB 11 is an eNB (e.g., macro eNB, pico eNB) or a HeNB. The (H)eNB 11 communicates with at least one UE 1. Each UE 1 is an IP capable UE. The stand-alone GW 12 provides the (H)eNB 11 with Internet Protocol (IP) connectivity to offload a particular type of traffic. Specifically, the SIPTO using the stand-alone GW 12 enables the UE 1 connected through the (H)eNB 11 to access a defined IP network 50 (e.g., the Internet) without the user plane traversing the EPC 20.

The stand-alone GW 12 includes a local SGW 13 and an LGW 14. The local SGW 13 is located in a RAN and has the functionality of a packet transfer gateway (i.e., SGW) between the RAN 10 and the core network. Note that, the local SGW 13 may have the SGW U-plane functionality (SGW-U) and not have the SGW C-plane (SGW-C). In other words, The C/U split may be applied to the local SGW 13. In this case, the SGW-C may be located in the EPC 20. More specifically, the SGW-C may be collocated with a PGW-C 24.

The local SGW 13 may be selected not only for a specific traffic to be offloaded to the IP network 50 but also for the traffic to be transmitted and received to and from a PDN 40 via the EPC 20. In this case, as shown in Fig. 1, the local SGW 13 may provide an S5 interface or reference point (including C-plane and U-plane) for communicating with a PGW 23 in the EPC 20.

The LGW 14 is configured to provide the PGW U-plane functionality (PGW-U). The LGW 14 is further configured to provide a C-plane interface for communicating with the PGW-C 24 located in the EPC 20. The C-plane interface may be referred to as an Sxb interface (or reference point).

Further, the LGW 14 may be configured to provide the PGW C-plane functionality (PGW-C). For example, the C/U split may be applied to the LGW 14 with regard to a certain APN, while it may not be applied to the LGW 14 with regard to other APNs. In other words, for a certain APN, the EPC 20 may select the PGW-U provided by the LGW 14 and the PGW-C (e.g., the PGW-C 24, which is described later) within the EPC 20. Meanwhile, for other APNs, the EPC 20 may select the PGW-U and the PGW-C provided by the LGW 14.

In the example of Fig. 1, the EPC 20 includes an MME 21, a Home Subscriber Server (HSS) 22, a PGW 23, and a PGW-C 24. The EPC 20 further includes a plurality of entities for PCC, i.e., a PCRF 25, an OCS 26, and an OFCS 27. The PCRF 25 may communicate with an Application Function (AF) 30 via an RF interface. The EPC 20 may include only some of the PCRF 25, the OCS 26 and the OFCS 27. For example, the OFCS 27 may be omitted when offline charging is not used. Alternatively, the OCS 26 may be omitted when online charging is not used.

The PGW-C 24 is configured to provide the PGW C-plane functionality. The PGW-C 24 is selected by the MME 21 when the C/U split is applied to the LGW 14 with regard to one or more APNs of the traffic to be offloaded to the IP network 50. The PGW-C 24 provides an Sxb interface with the LGW 14 (PGW-U) in the RAN 10. The PGW-C 24 further provides a Gx interface with the PCRF 25, a Gy interface with the OCS 26, or a Gz interface with the OFCS 27, or any combination thereof.

That is, in the configuration shown in Fig. 1, when the C/U split is applied to the LGW 14 with regard to one or more APNs of the traffic to be offloaded to the IP network 50, the LGW 14 provides the PGW-U functionality, while the PGW-C 24 is located in the EPC 20. In other words, the PGW-C 24 in the EPC 20 is selected for the LGW 14 to which the C/U split is applied. The PGW-C 24 in the EPC 20 communicates with the LGW 14 (or the stand-alone GW 12) in the RAN 10 via the Sxb interface, and meanwhile communicates with one or more PCC entities via the Gx, Gy or Gz interface. The PCC functionality thereby works with the LGW 14 (i.e., PGW-U) located in the stand-alone GW 12. Thus, the PGW-C 24 allows a PCC rule to be applied to the traffic to be offloaded to the IP network 50. The PCC rule contains, for example, a QoS policy and a charging rule to be applied to a Service Data Flow (SDF) of the UE 1 offloaded to the IP network 50, and an SDF template for detecting the service data flow.

In some implementations, the PGW-C 24 may receive a PCC rule from the PCRF 25 and notify the LGW 14 (i.e., PGW-U) of this PCC rule through the Sxb interface, and the LGW 14 (i.e., PGW-U) may operate as a Policy and Charging Enforcement Function (PCEF). In accordance with the PCC rule supplied from the PCRF 25via the PGW-C 24, the LGW 14 (i.e., PGW-U) functioning as the PCEF may perform QoS control and Flow Based bearer Charging (FBC) on a per-service data flow (i.e., per-IP packet flow) basis in terms of the service data flows of the UE 1 to be offloaded to the IP network 50. To be specific, the LGW 14 (i.e., PGW-U) may distinguish between service data flows of the UE 1 to be offloaded to the IP network 50 and map each service data flow to an Evolved Packet System (EPS) bearer (i.e., IP Connectivity Access Network (IP-CAN) bearer) corresponding to the QoS of the service data flow. Further, the LGW 14 (i.e., PGW-U) may monitor a service data flow as a chargeable event that triggers creation and closure of Charging Data Record (CDR) and count the number of packets of the service data flow. The creation of CDR containing charging information related to the service data flow may be performed by the LGW 14 (i.e., PGW-U) or may be performed by the PGW-C 24. The operation performed by the LGW 14 may be performed by the stand-alone GW 12. The service provided by the IP network 50 may be a V2X service provided by a V2X application server or a service provided by an MEC server. Further, the service data flow of the UE 1 may be the one related to V2X messages transmitted from the UE 1.

As can be understood from the above description, the improved SIPTO at the Local Network with stand-alone GW architecture according to this embodiment has a configuration where the C/U split is applied to the P-GW for the traffic to be offloaded, the PGW-U (or LGW-U) is located in the RAN 10, and meanwhile the PGW-C (or LGW-C) is located in the EPC 20. In other words, the PGW part in the stand-alone GW 12 is split into PGW-C and PGW-U, and only the PGW-C part is located in the EPC, while the PGW-U part remains in the stand-alone GW 12 in the RAN 10. Further, the PGW-C part (i.e., PGW-C 24), which is related to the stand-alone GW 12, has interfaces with one or more PCC entities (e.g., the PCRF 25, the OCS 26, and the OFCS 27), and the PCC functionality thereby works with the PGW-U (i.e., LGW 14) located in the stand-alone GW 12. The network architecture according to this embodiment thereby enables PCC for the traffic of the UE 1 offloaded at the RAN 10.

It should be noted that, while the Gx interface between the PGW-C 24 and the PCRF 25 uses the Diameter protocol, the Sxb interface between the PGW-C 24 and the LGW 14 (i.e., PGW-U) may use a GPRS Tunnelling Protocol (GTP) for the control plane (GTP-C) protocol. As described above, the Diameter protocol is a stateful protocol using the SCTP or the TCP. In contrast, the GTP-C is a connectionless protocol using the User Datagram Protocol (UDP). Thus, the GTP-C protocol generally has less traffic and lower communication frequency than the Diameter protocol. Therefore, the SIPTO at the Local Network with stand-alone GW network architecture according to this embodiment contributes to allowing a PCC rule to be applied to the LGW 14 without an excessive increase in load on the PGW-U (LGW 14) located in the RAN 10.

### Second Embodiment

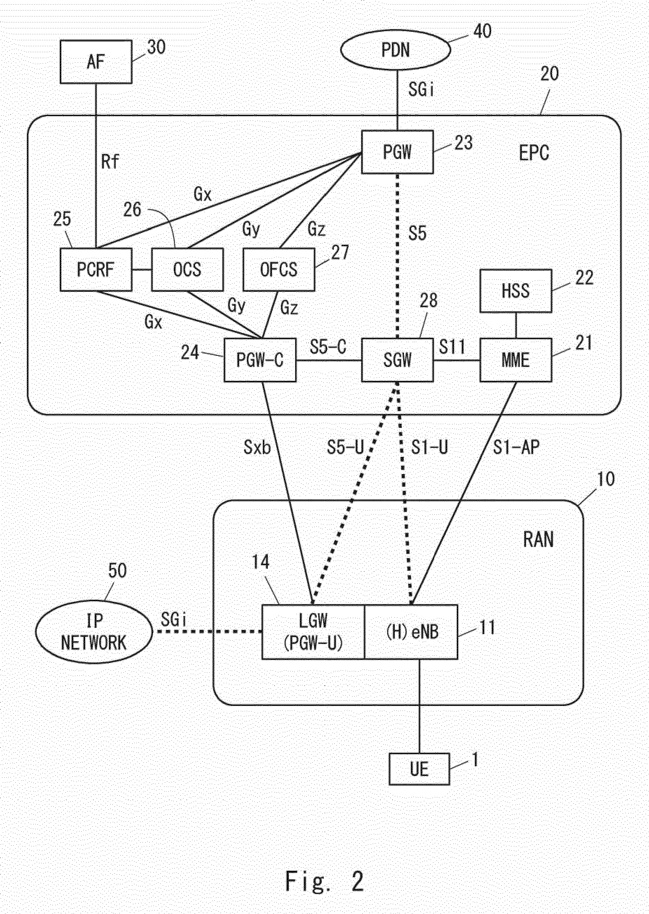

Fig. 2 shows a configuration example of a radio communication network according to this embodiment. This embodiment provides an improvement to the SIPTO at the Local Network with L-GW collocated with the (H)eNB architecture. In the example of Fig. 2, the RAN 10 includes the (H)eNB 11 and the LGW 14. The LGW 14 is collocated with the (H)eNB 11.

The LGW 14 is configured to provide PGW-U and also provide a C-plane interface (i.e., Sxb interface) with the PGW-C 24 located in the EPC 20, which is similar to the first embodiment. The LGW 14 may be configured to further provide the PGW C-plane functionality (PGW-C).

The EPC 20 shown in Fig. 2 includes network entities (or network elements, network nodes) similar to those of the EPC 20 shown in Fig. 1. For the SIPTO at the Local Network with L-GW collocated with the (H)eNB, the EPC 20 includes an SGW 28. The SGW 28 is selected for a specific traffic to be offloaded to the IP network 50. The SGW 28 may be selected further for the traffic to be transmitted and received to and from the PDN 40 via the EPC 20. In this case, as shown in Fig. 2, the SGW 28 may provide an S5 interface (including C-plane and U-plane) with the PGW 23.

The PGW-C 24 shown in Fig. 2 acts like the PGW-C 24 shown in Fig. 1. Specifically, the PGW-C 24 is configured to provide the PGW C-plane functionality. The PGW-C 24 is selected by the MME 21 when the C/U split is applied to the LGW 14 with regard to one or more APNs of the traffic to be offloaded to the IP network 50. The PGW-C 24 provides an Sxb interface with the LGW 14 (PGW-U) in the RAN 10. The PGW-C 24 further provides a Gx interface with the PCRF 25, a Gy interface with the OCS 26, or a Gz interface with the OFCS 27, or any combination thereof. The PCC functionality thereby works with the PGW-U located in the LGW 14. As in the first embodiment, in some implementations, the PGW-C 24 may receive a PCC rule from the PCRF 25 and notify the LGW 14 (PGW-U) of this PCC rule through the Sxb interface, and the LGW 14 (PGW-U) may operate as a Policy and Charging Enforcement Function (PCEF). In this embodiment, the service provided by the IP network 50 may be a V2X service provided by a V2X application server or a service provided by an MEC server. Further, the traffic offloaded to the IP network 50 may be the one related to V2X messages transmitted from the UE 1.

As can be understood from the above description, the improved SIPTO at the Local Network with L-GW collocated with the (H)eNB architecture according to this embodiment has a configuration where the C/U split is applied to the P-GW for the traffic to be offloaded, the PGW-U (or LGW-U) is located in the RAN 10, and meanwhile the PGW-C (or LGW-C) is located in the EPC 20. In other words, the PGW part in the LGW 14 is split into PGW-U and PGW-C, and only the PGW-C part is located in the EPC 20, while the PGW-U part remains in the LGW 14 in the RAN 10. Further, the PGW-C part (i.e., PGW-C 24), which is related to the LGW 14, has interfaces with one or more PCC entities (e.g., the PCRF 25, the OCS 26 and the OFCS 27), and the PCC functionality thereby works with the PGW-U located in the LGW14. Thus, the SIPTO at the Local Network with L-GW collocated with the (H)eNB architecture according to this embodiment provides advantages similar to those of the SIPTO at the Local Network with stand-alone GW architecture according to the first embodiment. Specifically, the SIPTO at the Local Network with L-GW collocated with the (H)eNB architecture according to this embodiment contributes to allowing a PCC rule to be applied to the LGW 14 without an excessive increase in load on the PGW-U (i.e., the LGW 14) located in the RAN 10.

As described earlier, the network architecture of the LIPA is similar to that of the SIPTO at the Local Network with L-GW collocated with the (H)eNB. Therefore, the network architecture according to this embodiment contributes also to improvement on the traffic offloading by the LIPA.

### Third Embodiment

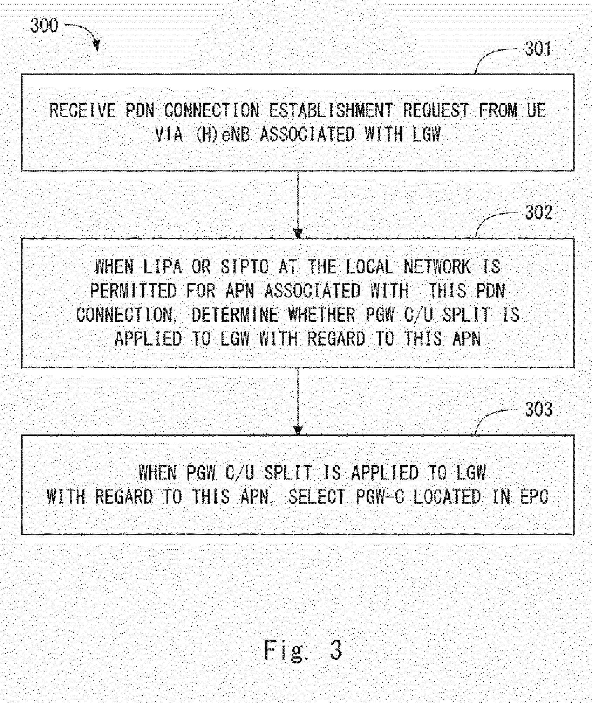

This embodiment provides an operation of the MME 21 effective for the improved networks for the SIPTO at the Local Network and the LIPA described in the first and second embodiments. Fig. 3 is a flowchart showing processing 300 that is one example of the operation of the MME 21. The processing 300 shows the operation of the MME 21 in response to receiving a PDN connection establishment request from the UE 1. The PDN connection establishment request from the UE 1 is an attach request (i.e., Non-Access Stratum (NAS): attach request message) or an additional PDN connection request (i.e., NAS PDN Connectivity Request message).

In Step 301, the MME 21 receives the PDN connection establishment request from the UE 1 via the (H)eNB 11 associated with the LGW 14. In Step 302, when the LIPA or the SIPTO at the Local Network is permitted for an APN associated with the requested PDN connection, the MME 21 determines whether the PGW C/U split is applied to the LGW 14 with regard to this APN.

In some implementations, the MME 21 may determine whether the PGW C/U split is applied to the LGW 14 with regard to a particular APN, based on this APN and a Local Home Network (LHN) ID received from the (H)eNB 11. As described earlier, the (H)eNB 11 supporting the SIPTO at the Local Network with stand-alone GW sends its Local Home Network (LHN) ID to the MME 21 via an S1AP message. Specifically, the (H)eNB 11 supporting the SIPTO at the Local Network with stand-alone GW sends a Local Home Network (LHN) ID to the MME 21 via every INITIAL UE MESSAGE and every UPLINK NAS TRANSPORT message. The MME 21 may use, for this determination, a list of combinations of APN and LHN ID for which the C/U split is permitted. The list of combinations of APN and LHN ID may be set as a local configuration to the MME 21 by a mobile operator.

In some implementations, the MME 21 may determine whether the PGW C/U split is applied to the LGW 14 with regard to a particular APN, based on the APN and an LGW identifier (e.g., LGW address) received from the (H)eNB 11. As described earlier, the (H)eNB 11 supporting the LIPA or the SIPTO at the Local Network with L-GW collocated with the (H)eNB sends its LGW address to the MME 21 by using an S1AP message. Specifically, for example, the (H)eNB 11 supporting the LIPA or the SIPTO at the Local Network with L-GW collocated with the (H)eNB sends an LGW address to the MME 21 via every INITIAL UE MESSAGE and every UPLINK NAS TRANSPORT message. The MME 21 may use, for this determination, a list of combinations of APN and LGW address for which the C/U split is permitted. The list of combinations of APN and LGW address may be set as a local configuration to the MME 21 by a mobile operator.

In some implementations, the MME 21 may determine whether the PGW C/U split is applied to the LGW 14 with regard to a particular APN, based on the APN and a (H)eNB identifier (e.g., eNB ID). The MME 21 may use, for this determination, a list of combinations of APN and (H)eNB identifier for which C/U split is permitted. The list of combinations of APN and (H)eNB identifier may be set as a local configuration to the MME 21 by a mobile operator. Further, this implementation may be used in combination with the above-described determination based on an LHN ID for the SIPTO at the Local Network with stand-alone GW.

Referring back to Fig. 3, when the PGW C/U split is applied to the LGW 14 with regard to the APN, the MME 21 performs PGW selection (or PGW-C selection) and selects the PGW-C 24 located in the EPC 20 in Step 303. Improvements to the PGW selection (or PGW-C selection) performed by the MME 21 are described in detail in the following embodiments. On the other hand, when the PGW C/U split is not applied to the LGW 14 with regard to this APN, the MME 21 performs PGW selection in accordance with the existing rule of the LIPA and the SIPTO at the Local Network.

As can be understood from the above description, in this embodiment, the MME 21 determines whether the PGW C/U split is applied to the LGW 14 with regard to an APN to which a PDN connection establishment is requested by the UE 1. The MME 21 can thereby perform different PGW selections depending on whether the PGW C/U split is applied to the LGW 14 or not. Thus, the MME 21 can determine whether to locate the PGW-C in the EPC 20 for the LIPA or the SIPTO at the Local Network. In other words, the MME 21 can determine whether to use the PGW-C 24 in the EPC 20 for the LIPA or the SIPTO at the Local Network.

### Fourth Embodiment

This embodiment provides operations of the MME 21, the SGW (or SGW-C) and the PGW-C 24 effective for the improved network for the SIPTO at the Local Network with stand-alone GW described in the first embodiment.

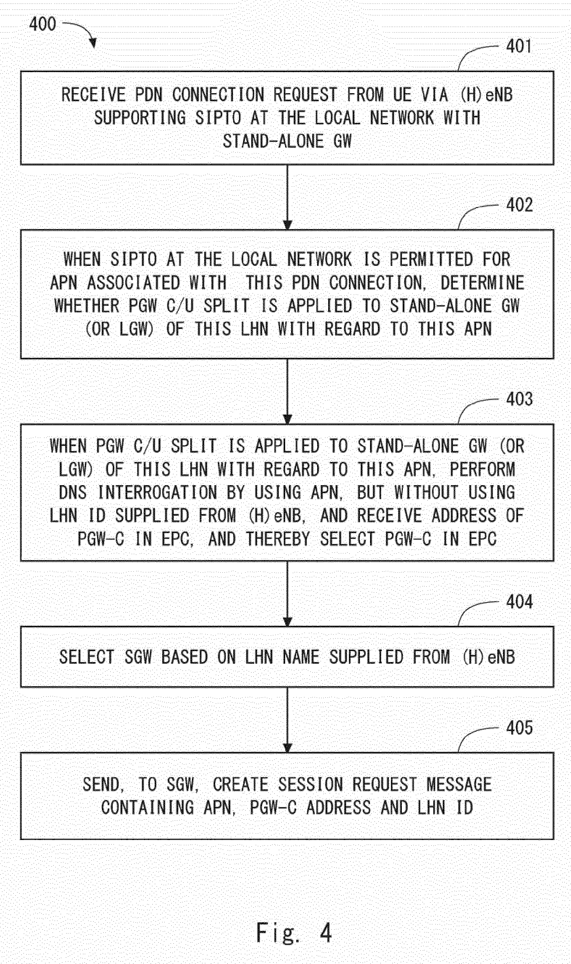

Fig. 4 is a flowchart showing processing 400 that is one example of the operation of the MME 21. The processing 400 shows the operation of the MME 21 in response to receiving a PDN connection establishment request (e.g., attach request or PDN Connectivity Request) from the UE 1.

In Step 401, the MME 21 receives a PDN connection establishment request from the UE 1 via the (H)eNB 11 supporting the SIPTO at the Local Network with stand-alone GW. In Step 402, when the SIPTO at the Local Network is permitted for an APN associated with the requested PDN connection, the MME 21 determines whether the PGW C/U split is applied to the stand-alone GW 12 (or LGW 14) of this Local Home Network (LHN) with regard to this APN. The determination in Step 402 may be made in a manner similar to the determination in Step 302 of Fig. 3.

When the PGW C/U split is not applied to the stand-alone GW 12 (or LGW 14) with regard to this APN, the MME 21 performs PGW selection in accordance with the existing rule of the SIPTO at the Local Network with stand-alone GW. Specifically, the MME 21 performs a Domain Name System (DNS) interrogation for PGW selection by using both the APN and the LHN ID supplied from the (H)eNB 11. By this DNS interrogation, the MME 21 receives the address of the stand-alone GW 12 (or LGW 14) from a DNS server, for example.

On the other hand, when the PGW C/U split is applied to the stand-alone GW 12 (or LGW 14) with regard to this APN, the MME 21 performs a DNS interrogation by using the APN, but without using the LHN ID supplied from the (H)eNB 11 (Step 403). By this DNS interrogation, the MME 21 receives the address of the PGW-C 24 in the EPC 20 from a DNS server.

In Step 404, the MME 21 performs SGW selection. The MME 21 may follow the existing rule of SGW selection for the SIPTO at the Local Network with stand-alone GW. Specifically, the MME 21 may select an SGW based on a LHN name contained in the LHN ID supplied from the (H)eNB 11. To be more specific, the MME 21 may perform a DNS interrogation using the LHN ID (or the LHN name) supplied from the (H)eNB 11 and receive the address of the local SGW 13 located in the stand-alone GW 12. The MME 21 thereby selects the local SGW 13 located in the stand-alone GW 12.

Note that, as described earlier, the C/U split may be applied to the local SGW 13. In this case, the MME 21 may perform SGW selection (i.e., SGW-C selection) different from the existing SGW selection, so as to select an SGW-C (not shown) located in the EPC 20. This improved SGW selection (i.e., SGW-C selection) may be, for example similar to the above-described PGW selection operation for selecting the PGW-C in the EPC 20. Specifically, the MME 21 may perform a DNS interrogation using the APN, but without using the LHN ID (or the LHN name) supplied from the (H)eNB 11.

In Step 405, the MME 21 sends a Create Session Request message to the selected SGW. Step 405 shows the operation performed when the PGW-C 24 in the EPC 20 has been selected for the SIPTO at the Local Network with stand-alone GW (Step 403). Specifically, the MME 21 includes the LHN ID received from the (H)eNB 11 in the Create Session Request message. Thus, the Create Session Request message in Step 405 contains the APN, the PGW-C address (i.e., the address of the PGW-C 24), and the LHN ID received from the (H)eNB 11. As described later, the LHN ID contained in the Create Session Request message is used for PGW-U selection by the PGW-C 24.

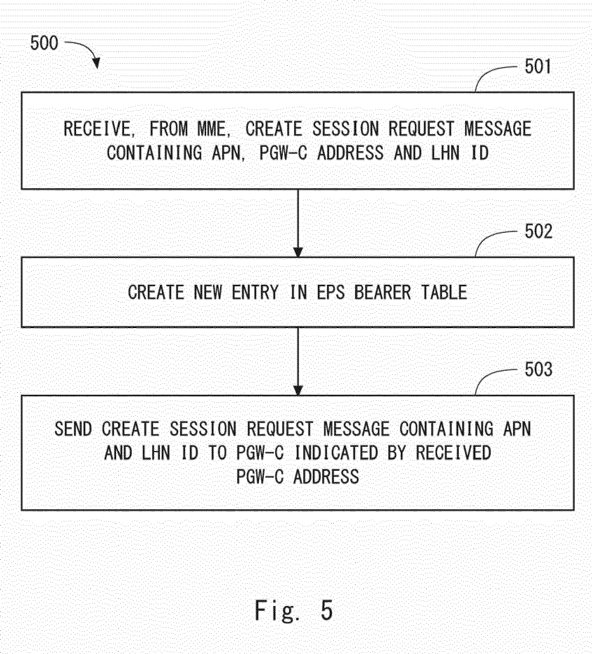

Fig. 5 is a flowchart showing processing 500 that is one example of the operation of the SGW selected by the MME 21. As described with reference to Fig. 4, the selected SGW may be the local SGW 13 or the SGW-C (not shown) in the EPC 20. In Step 501, the selected SGW receives, from the MME 21, a Create Session Request message containing the APN, the PGW address (i.e., PGW-C address) and the LHN ID. In Step 502, the SGW creates a new entry in its EPS bearer table in response to receiving the Create Session Request message. In Step 503, the SGW sends a Create Session Request message containing the APN and the LHN ID to the PGW-C 24 indicated by the received PGW-C address.

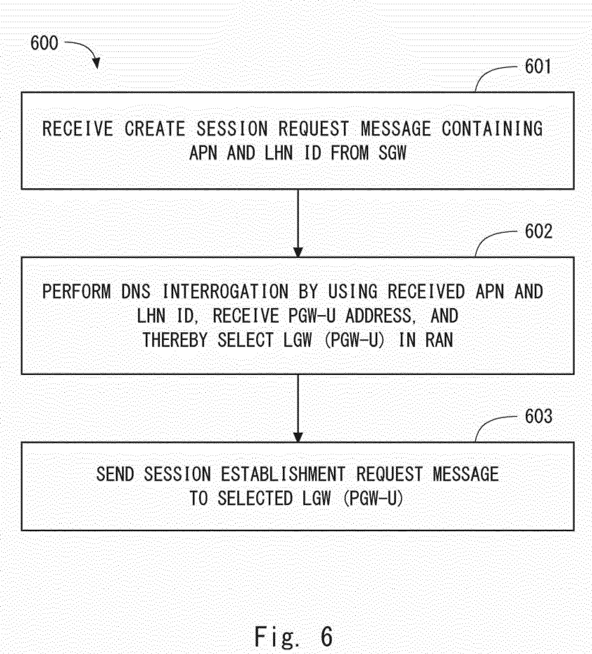

Fig. 6 is a flowchart showing processing 600 that is one example of the operation of the PGW-C 24. In Step 601, the PGW-C 24 receives a Create Session Request message containing the APN and the LHN ID from the SGW.

In Step 602, the PGW-C 24 performs PGW-U selection. Specifically, to select an appropriate gateway for the SIPTO at the Local Network with stand-alone GW, the PGW-U selection functionality in the PGW-C 24 uses the APN and the LHN ID in a DNS interrogation to find the identity of the PGW-U. To be specific, the PGW-C 24 performs a DNS interrogation by using the received APN and LHN ID when the Create Session Request message contains the LHN ID, and receives the PGW-U address from the DNS server. The PGW-U address indicates the address of the LGW 14 (stand-alone GW 12). The PGW-C 24 thereby selects the LGW 14 in the RAN 10 in the PGW-U selection. Alternatively, the PGW-C 24 may select the LGW 14 in the RAN 10 in accordance with its local configuration.

In Step 603, the PGW-C 24 sends a Session Establishment Request message to the LGW 14 selected as the PGW-U. This Session Establishment Request message requests the LGW 14 to create a session regarding the traffic to be offloaded at the RAN 10.

As can be understood from the above description, in this embodiment, when the PGW C/U split is applied to the LGW 14, the MME 21 performs a DNS interrogation for PGW-C selection by using the APN, but without using the LHN ID received from the (H)eNB 11. The MME 21 can thereby select the PGW-C 24 in the EPC 20, instead of the LGW 14 in the RAN 10, when the PGW C/U split is applied to the LGW 14.

Further, in this embodiment, when the PGW C/U split is applied to the LGW 14, the MME 21 includes the LHN ID received from the (H)eNB 11 in a Create Session Request message that triggers creation of a session regarding the traffic to be offloaded at the RAN 10. Thus, the MME 21 can assist the PGW-U selection performed by the PGW-C 24 for enabling the PGW C/U split for the LGW 14.

Further, in this embodiment, when the Create Session Request message received from the MME 21 contains the LHN ID, the SGW (or SGW-C) selected by the MME 21 generates a Create Session Request message containing this LHN ID and sends it to the PGW-C 24. Thus, the SGW can assist the PGW-U selection performed by the PGW-C 24 for enabling the PGW C/U split for the LGW 14.

Further, in this embodiment, when the Create Session Request message contains the LHN ID, the PGW-C 24 performs a DNS interrogation by using the received APN and LHN ID. Thus, the PGW-C 24 can perform PGW-C selection suitable for the PGW C/U split for the LGW 14.

### Fifth Embodiment

This embodiment provides operations of the MME 21, the SGW (or SGW-C) and the PGW-C 24 effective for the improved network for the SIPTO at the Local Network with stand-alone GW described in the first embodiment. The above-described fourth embodiment shows an example in which the PGW-U selection functionality is located in the PGW-C 24. Alternatively, the PGW-U selection functionality may be located in the MME 21. In this embodiment, an example in which the MME 21 performs PGW-U selection (i.e., acquisition of a PGW-U address) is described.

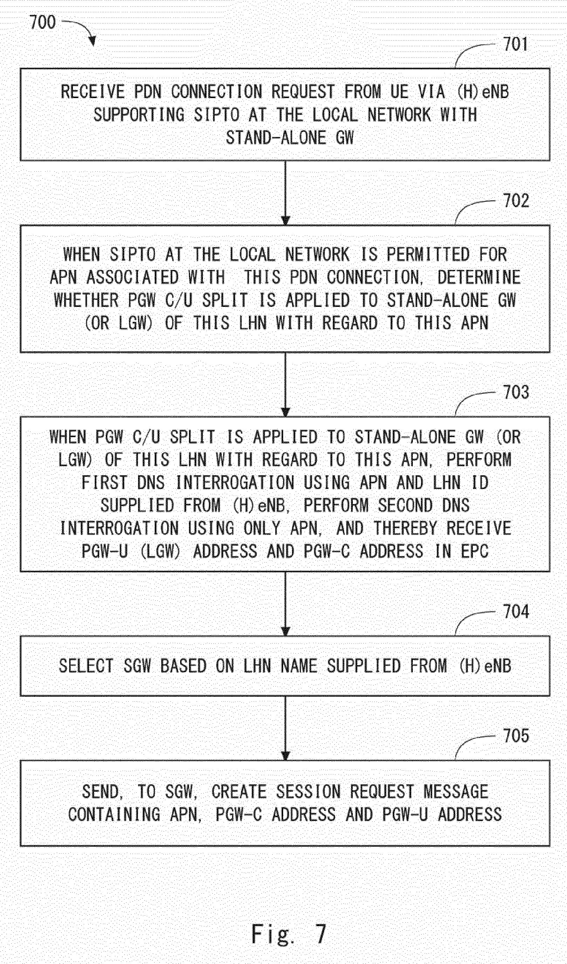

Fig. 7 is a flowchart showing processing 700 that is one example of the operation of the MME 21. The processing 700 shows the operation of the MME 21 in response to receiving a PDN connection establishment request (e.g., attach request or PDN Connectivity Request) from the UE 1. The processing of Steps 701 and 702 is similar to the processing of Steps 401 and 402 in Fig. 4.

In Step 703, when the PGW C/U split is applied to the stand-alone GW 12 (or LGW 14) with regard to the APN, the MME 21 performs PGW-U selection and PGW-C selection. Specifically, for PGW-U selection, the MME 21 performs a first DNS interrogation by using the APN and the LHN ID supplied from the (H)eNB 11. By this first DNS interrogation, the MME 21 receives a PGW-U address (i.e., the address of the stand-alone GW 12 or the LGW 14) from a DNS server. Further, for PGW-C selection, the MME 21 performs a second DNS interrogation by using the APN, but without using the LHN ID. By this second DNS interrogation, the MME 21 receives a PGW-C address (i.e., the address of the PGW-C 24) from a DNS server. Note that, the order of performing the first and second DNS interrogation is not particularly limited. The first DNS interrogation may be performed before the second DNS interrogation, or after the second DNS interrogation, or simultaneously (in parallel) with the second DNS interrogation.

In Step 704, the MME 21 performs SGW selection. The processing of Step 704 is similar to the processing of Step 404 in Fig. 4. In Step 705, the MME 21 sends a Create Session Request message to the selected SGW. Step 705 shows the operation performed when the PGW-C 24 in the EPC 20 is selected for the SIPTO at the Local Network with stand-alone GW (Step 703). Specifically, the MME 21 includes both the PGW-C address (i.e., the address of the PGW-C 24) and the PGW-U address (i.e., the address of the stand-alone GW 12 or the LGW 14) in the Create Session Request message.

When the PGW C/U split is not applied to the stand-alone GW 12 (or the LGW 14) with regard to the APN, the MME 21 may operate in the same way as in the case of the existing SIPTO at the Local Network with stand-alone GW. Specifically, the MME 21 includes, in the Create Session Request message, the address of the LGW 14 (or the stand-alone GW 12) as the PGW address.

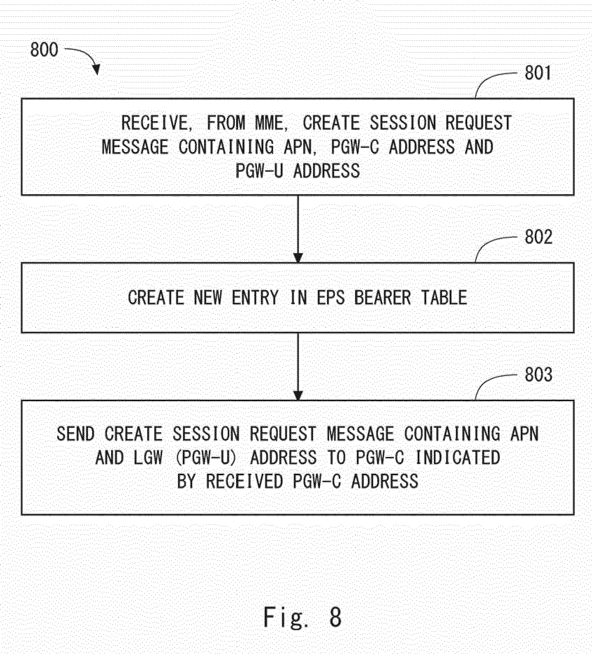

Fig. 8 is a flowchart showing processing 800 that is one example of the operation of the SGW selected by the MME 21. The selected SGW may be the local SGW 13 or the SGW-C (not shown) in the EPC 20. In Step 801, the selected SGW receives from the MME 21 a Create Session Request message containing the APN, the PGW-C address and the PGW-U address. In Step 802, the SGW creates a new entry in its EPS bearer table in response to receiving the Create Session Request message. In Step 803, the SGW sends a Create Session Request message containing the APN and the PGW-U address to the PGW-C 24 indicated by the received PGW-C address.

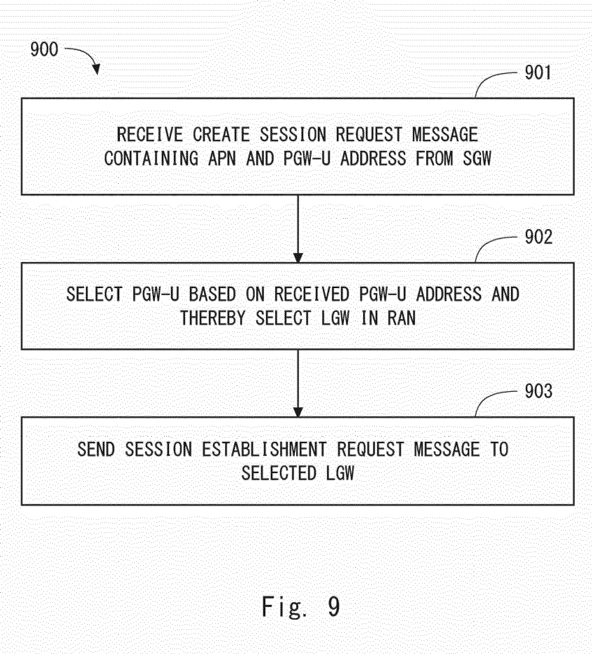

Fig. 9 is a flowchart showing processing 900 that is one example of the operation of the PGW-C 24. In Step 901, the PGW-C 24 receives from the SGW a Create Session Request message containing the APN and the PGW-U address. In Step 902, the PGW-C 24 selects the PGW-U based on the received PGW-U address. The PGW-C 24 thereby selects the LGW 14 in the RAN as the PGW-U. In Step 903, the PGW-C 24 sends a Session Establishment Request message to the LGW 14 selected as the PGW-U. The Session Establishment Request message requests the LGW 14 to create a session regarding the traffic to be offloaded at the RAN 10.

As can be understood from the above description, in this embodiment, when the PGW C/U split is applied to the stand-alone GW 12 (LGW 14), the MME 21 performs a DNS interrogation for PGW-C selection by using the APN, but without using the LHN ID received from the (H)eNB 11, and also performs a DNS interrogation for PGW-U by using both the APN and the LHN ID received from the (H)eNB. The MME 21 can thereby select the PGW-C 24 in the EPC 20 and select the LGW 14 as the PGW-U when the PGW C/U split is applied to the stand-alone GW 12 (LGW 14).

Further, in this embodiment, when the PGW C/U split is applied to the stand-alone GW 12 (LGW 14), the MME 21 includes both the PGW-C address and the PGW-U address in a Create Session Request message that triggers creation of a session regarding the traffic to be offloaded at the RAN 10. Thus, the MME 21 can inform the PGW-C 24 that the LGW 14 should be selected as the PGW-U to enable the PGW C/U split for the stand-alone GW 12 (LGW 14).

Further, in this embodiment, when the Create Session Request message received from the MME 21 contains the PGW-U address, the SGW (or SGW-C) selected by the MME 21 generates a Create Session Request message containing this PGW-U address and sends it to the PGW-C 24. Thus, the SGW can assist PGW-U selection by the PGW-C 24 for enabling PGW C/U split of the LGW 14.

Note that, the acquisition of the PGW-U address performed by the MME 21 described in this embodiment can be referred to as the assist of PGW-U selection by the PGW-C 24, rather than referred to as PGW-U selection. In this case, when the Create Session Request message contains the PGW-U address, the PGW-U selection functionality of the PGW-C 24 may operate to use the PGW-U address proposed in the Create Session Request message by the MME 21, instead of performing a DNS interrogation. The Create Session Request message containing this PGW-U address (i.e., the address of the LGW14) enables the PGW-C node (i.e., PGW-C 24) to select an appropriate PGW-U node for the SIPTO at the Local Network.

### Sixth Embodiment

This embodiment provides operations of the MME 21, the SGW (or SGW-C) and the PGW-C 24 effective for the improved network for the SIPTO at the Local Network with stand-alone GW described in the first embodiment. In this embodiment, just like the fifth embodiment, an example in which the MME 21 performs PGW-U selection (i.e., acquisition of a PGW-U address) is described.

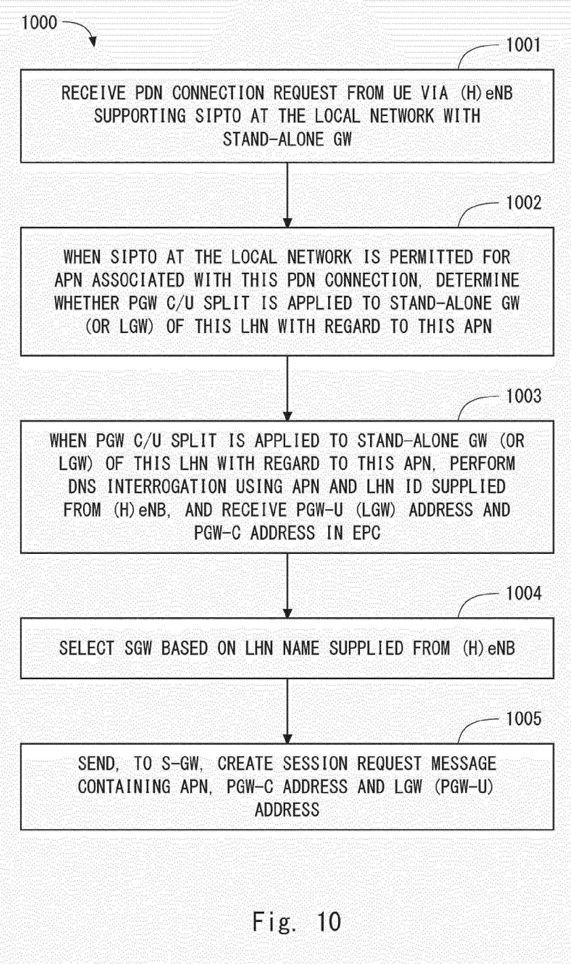

Fig. 10 is a flowchart showing processing 1000 that is one example of the operation of the MME 21. The processing 1000 shows the operation of the MME 21 in response to receiving a PDN connection establishment request (e.g., attach request or PDN Connectivity Request) from the UE 1. The processing of Steps 1001 and 1002 is similar to the processing of Steps 401 and 402 in Fig. 4 and is also similar to the processing of Steps 701 and 702 in Fig. 7.

In Step 1003, when the PGW C/U split is applied to the stand-alone GW 12 (or LGW 14) with regard to the APN, the MME 21 performs PGW-U selection and PGW-C selection. In the example of Fig. 10, the MME 21 performs a DNS interrogation by using the APN and the LHN ID supplied from the (H)eNB 11. By this DNS interrogation, the MME 21 receives both the PGW-U address (i.e., the address of the stand-alone GW 12 or the LGW 14) and the PGW-C address (i.e., the address of the PGW-C 24) from a DNS server.

The processing of Steps 1004 and 1005 in Fig. 10 is similar to the processing of Steps 704 and 705 in Fig. 7.

The operation of the SGW (or SGW-C) and the operation of the PGW-C 24 according to this embodiment are similar to the operation of the SGW (or SGW-C) (e.g., Fig. 8) and the operation of the PGW-C 24 (e.g., Fig. 9) according to the fifth embodiment.

This embodiment provides advantages similar to those of the fifth embodiment.

### Seventh Embodiment

This embodiment provides operations of the MME 21, the SGW (or SGW-C) and the PGW-C 24 effective for the improved network for the LIPA and the SIPTO at the Local Network with L-GW collocated with the (H)eNB described in the second embodiment.

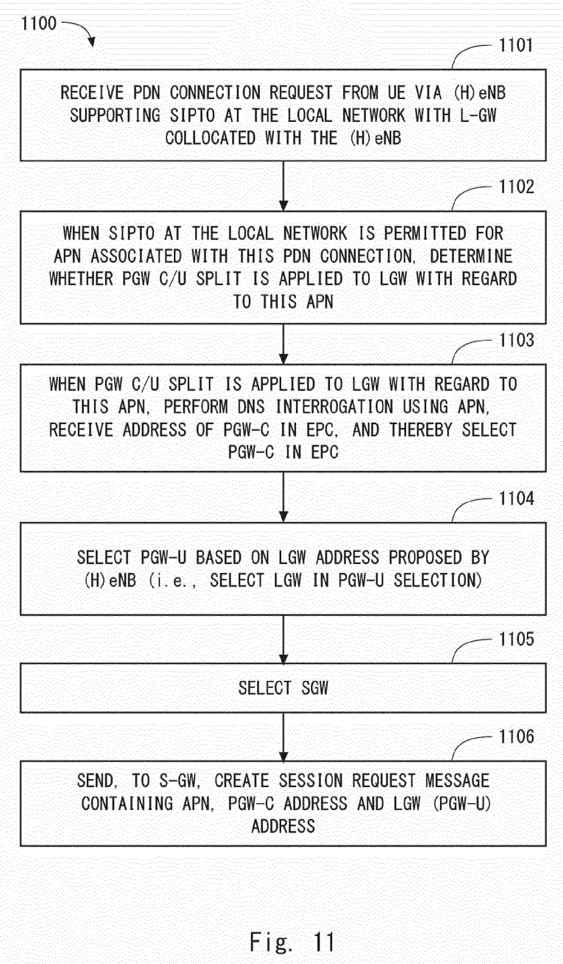

Fig. 11 is a flowchart showing processing 1100 that is one example of the operation of the MME 21. The processing 1100 shows the operation of the MME 21 in response to receiving a PDN connection establishment request (e.g., attach request or PDN Connectivity Request) from the UE 1.

In Step 1001, the MME 21 receives a PDN connection establishment request from the UE 1 via the (H)eNB 11 that supports the SIPTO at the Local Network with L-GW collocated with the (H)eNB. In Step 1102, when the SIPTO at the Local Network is permitted for an APN associated with the requested PDN connection, the MME 21 determines whether the PGW C/U split is applied to the LGW 14 collocated with this (H)eNB 11 with regard to this APN. The determination in Step 1102 may be made in a manner similar to the determination in Step 302 of Fig. 3.

When the PGW C/U split is not applied to the LGW 14 with regard to this APN, the MME 21 performs PGW selection in accordance with the existing rule of the SIPTO at the Local Network with L-GW collocated with the (H)eNB. Specifically, the PGW selection functionality of the MME 21 uses the LGW address proposed by the (H)eNB 11, instead of performing a DNS interrogation.

On the other hand, when the PGW C/U split is applied to the LGW 14 with regard to this APN, the MME 21 performs a DNS interrogation by using the APN (Step 1103). By this DNS interrogation, the MME 21 receives the address of the PGW-C 24 in the EPC 20 from a DNS server.

In Step 1104, the MME 21 performs PGW-U selection. In this step, the MME 21 selects the PGW-U in accordance with the existing rule of PGW selection for the SIPTO at the Local Network with L-GW collocated with the (H)eNB. Specifically, the MME 21 selects the PGW-U based on the LGW address proposed by the (H)eNB 11. Stated differently, the MME 21 selects the LGW address proposed by the (H)eNB 11 as the PGW-U address.

In Step 1105, the MME 21 performs SGW selection. As described earlier, the collocation between the SGW and the LGW is not applied to the SIPTO at the Local Network with L-GW collocated with the (H)eNB. Thus, the MME 21 may perform the existing SGW selection (e.g., DNS interrogation).

In Step 1106, the MME 21 sends a Create Session Request message to the selected SGW. Step 1106 shows the operation performed when the PGW-C 24 in the EPC 20 is selected for the SIPTO at the Local Network with L-GW collocated with the (H)eNB (Step 1103). Specifically, the MME 21 includes both the PGW-C address (i.e., the address of the PGW-C 24) and the PGW-U address (i.e., the address of the LGW 14) in the Create Session Request message.

The operation of the SGW (or SGW-C) and the operation of the PGW-C 24 according to this embodiment are similar to the operation of the SGW (or SGW-C) (e.g., Fig. 8) and the operation of the PGW-C 24 (e.g., Fig. 9) according to the fifth embodiment.

As can be understood from the above description, in this embodiment, when the PGW C/U split is applied to the LGW 14 collocated with the (H)eNB 11, the MME 21 performs a DNS interrogation for PGW-C selection by using the APN, but without using the LGW address proposed by the (H)eNB 11. The MME 21 can thereby select the PGW-C 24 in the EPC 20 as the PGW-C when the PGW C/U split is applied to the LGW 14 collocated with the (H)eNB 11.

Further, in this embodiment, when the PGW C/U split is applied to the LGW 14 collocated with the (H)eNB 11, the MME 21 includes both the PGW-C address and the PGW-U address in a Create Session Request message that triggers creation of a session regarding the traffic to be offloaded at the RAN 10. Thus, the MME 21 can inform the PGW-C 24 that the LGW 14 should be selected as the PGW-U to enable the PGW C/U split for the LGW 14 collocated with the (H)eNB 11.

As described earlier, the network architecture of the LIPA is similar to that of the SIPTO at the Local Network with L-GW collocated with the (H)eNB. Therefore, this embodiment contributes also to improvement on the traffic offloading by the LIPA.

### Eighth Embodiment

This embodiment provides operations of the MME 21, the SGW (or SGW-C) and the PGW-C 24 effective for the improved network for the SIPTO at the Local Network with stand-alone GW described in the first embodiment.

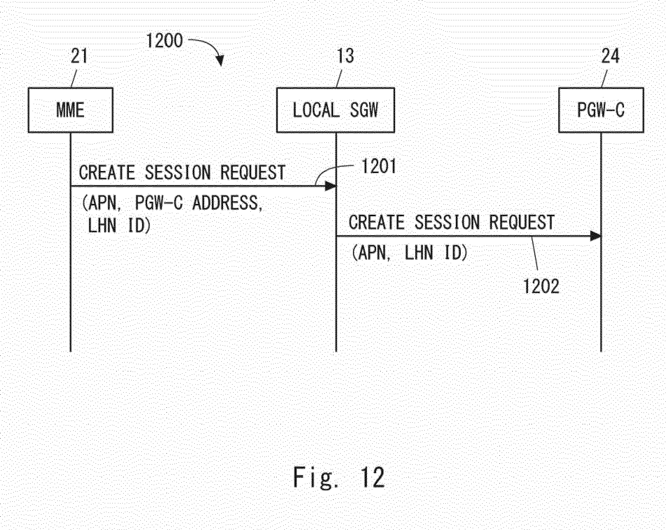

Fig. 12 is a sequence diagram showing processing 1200 that is one example of a signaling procedure according to this embodiment. In Step 1201, the MME 21 sends a Create Session Request message to the selected SGW (e.g., the local SGW 13). The MME 21 includes the LHN ID received from the (H)eNB 11 in the Create Session Request message. To be specific, when the MME 21 assigns the PGW-C 24 in the EPC 20 to the SIPTO at the Local Network with stand-alone GW, the LHN ID is set so as to allow the PGW-C 24 to select an appropriate gateway for the SIPTO at the Local Network with stand-alone GW. Thus, the Create Session Request message in Step 1201 contains the APN, the PGW-C address (i.e., the address of the PGW-C24), and the LHN ID received from the (H)eNB 11.

In Step 1202, in response to receiving the Create Session Request message from the MME 21, the selected SGW (e.g., the local SGW 13) sends a Create Session Request message to the PGW-C 24. The SGW includes the LHN ID received from the MME 21 in the Create Session Request message destined for the PGW-C 24.

The procedure of Fig. 12 can assist the PGW-U selection performed by the PGW-C 24 for enabling the PGW C/U split for the LGW 14.

### Ninth Embodiment

This embodiment provides operations of the MME 21, the SGW (or SGW-C) and the PGW-C 24 effective for the improved networks for the SIPTO at the Local Network and the LIPA described in the first and second embodiments.

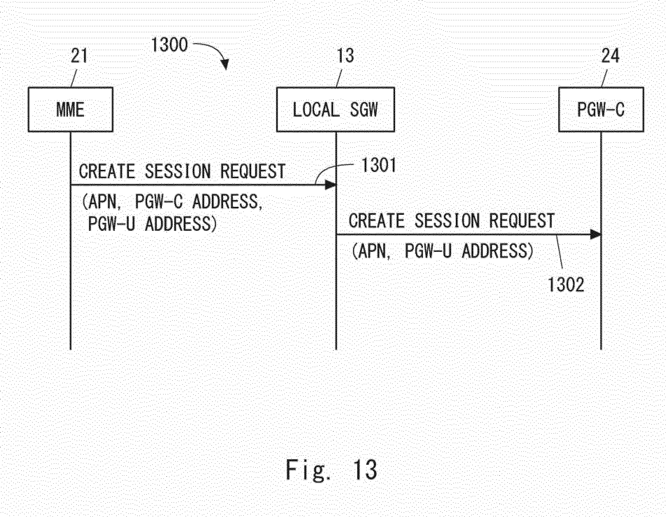

Fig. 13 is a sequence diagram showing processing 1300 that is one example of a signaling procedure according to this embodiment. In Step 1301, the MME 21 sends a Create Session Request message to the selected SGW (e.g., the local SGW 13). The MME 21 includes both the PGW-C address (i.e., the address of the PGW-C 24) and the PGW-U address (i.e., the address of the stand-alone GW 12 or the LGW 14) in the Create Session Request message. Thus, the Create Session Request message in Step 1301 contains the APN, the PGW-C address (i.e., the address of the PGW-C 24), and the PGW-U address (i.e., the address of the stand-alone GW 12 or the LGW 14).

In Step 1302, in response to receiving the Create Session Request message from the MME 21, the selected SGW (e.g., the local SGW 13) sends a Create Session Request message to the PGW-C 24. The SGW includes the PGW-U address received from the MME 21 in the Create Session Request message destined for the PGW-C 24.

The procedure shown in Fig. 13 can inform the PGW-C 24 that the LGW 14 should be selected as the PGW-U to enable the PGW C/U split for the LGW 14 included in the stand-alone GW 12 or the LGW 14 collocated with the (H)eNB 11.

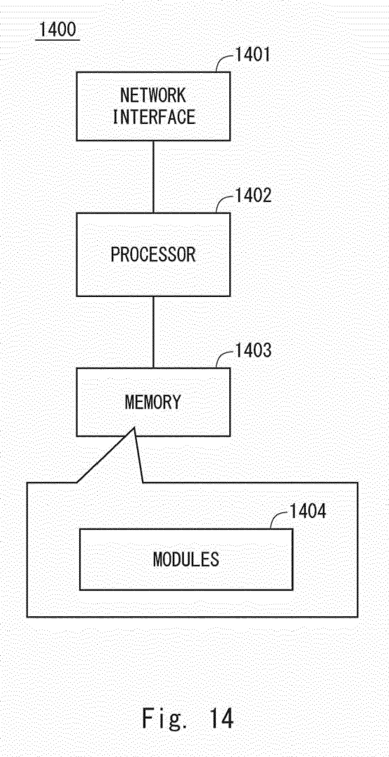

In the following, configuration examples of network nodes (e.g., the stand-alone Gateway 12, the local SGW 13, the LGW 14, the MME 21, the PGW-C 24, and the SGW-C (not illustrated in the drawings)) in the above embodiments according to the above embodiments will be described. Fig. 14 is a block diagram showing a configuration example of a network node 1400 according to the above-described embodiments. The network node 1400 is, for example, the stand-alone Gateway 12, the local SGW 13, the LGW 14, the MME 21, the PGW-C 24, or the SGW-C (not illustrated in the drawings).

Referring to Fig. 14, the network node 1400 includes a network interface 1401, a processor 1402, and a memory 1403. The network interface 1401 is used to communicate with network nodes (e.g., RAN nodes or other network nodes). The network interface 1401 may include, for example, a network interface card (NIC) conforming to the IEEE 802.3 series.

The processor 1402 may be, for example, a microprocessor, a Micro Processing Unit (MPU), or a Central Processing Unit (CPU). The processor 1402 may include a plurality of processors.

The memory 1403 is composed of a combination of a volatile memory and a nonvolatile memory. The volatile memory is, for example, a Static Random Access Memory (SRAM), a Dynamic RAM (DRAM), or a combination thereof. The non-volatile memory is, for example, a mask Read Only Memory (MROM), an Electrically Erasable Programmable ROM (EEPROM), a flash memory, a hard disc drive, or any combination thereof. The memory 1403 may include a storage located apart from the processor 1402. In this case, the processor 1402 may access the memory 1403 through the network interface 1401 or through an I/O interface (not illustrated in the drawings).

The memory 1403 may store one or more software modules (or programs) 1404 including instructions and data to perform the processing of one of the network nodes described in the above embodiments. In some implementations, the processor 1402 may load these one or more software modules 1404 from the memory 1403 and execute the loaded software modules, thereby performing the processing of one of the network nodes described in the above embodiments.

As described above with reference to Fig. 14, each of the processors included in the network nodes (e.g., the stand-alone Gateway 12, the local SGW 13, the LGW 14, the MME 21, the PGW-C 24, and the SGW-C (not illustrated in the drawings)) in the above embodiments executes one or more programs including a set of instructions to cause a computer to perform an algorithm described above with reference to the drawings. These programs may be stored in various types of non-transitory computer readable media and thereby supplied to computers. The non-transitory computer readable media includes various types of tangible storage media. Examples of the non-transitory computer readable media include a magnetic recording medium (such as a flexible disk, a magnetic tape, and a hard disk drive), a magneto-optic recording medium (such as a magneto-optic disk), a Compact Disc Read Only Memory (CD-ROM), CD-R, CD-R/W, and a semiconductor memory (such as a mask ROM, a Programmable ROM (PROM), an Erasable PROM (EPROM), a flash ROM, and a Random Access Memory (RAM)) . These programs may be supplied to computers by using various types of transitory computer readable media. Examples of the transitory computer readable media include an electrical signal, an optical signal, and an electromagnetic wave. The transitory computer readable media can be used to supply programs to a computer through a wired communication line (e.g., electric wires and optical fibers) or a wireless communication line.

### Other Embodiments

Each of the above embodiments may be used individually, or two or more of the embodiments may be appropriately combined with one another.

The (H)eNB 11 described in the above embodiments may be implemented based on a Cloud Radio Access Network (C-RAN) architecture. The C-RAN may also be referred to as a Centralized RAN. Accordingly, the processes and operations performed by the (H)eNB 11 described in the above embodiments may be provided by a Digital Unit (DU) or by a combination of a DU and a Radio Unit (RU). The DU may also be referred to as a Baseband Unit (BBU) or a Central Unit (CU). Meanwhile, the RU may also be referred to as a Remote Radio Head (RRH), Remote Radio Equipment (RRE), or a Distributed Unit (DU). In other words, the processes and operations performed by the (H)eNB 11 described in the above embodiments may be provided by one or more radio stations (or RAN nodes).

Further, the above-described embodiments are merely examples of applications of the technical ideas obtained by the inventors. These technical ideas are not limited to the above-described embodiments and various modifications may be made thereto.

For example, the whole or part of the embodiments disclosed above can be described as, but not limited to, the following supplementary notes.

### (Supplementary note 1)

A mobility management entity located in a core network, the mobility management entity comprising:
at least one memory; and
at least one processor coupled to the at least one memory and configured to perform Packet Data Network (PDN)-gateway selection during a session establishment procedure for a particular type of traffic to be offloaded at a local gateway, wherein
the local gateway is located in a Radio Access Network (RAN) including a base station, has a PDN-gateway user plane, and is configured to provide Internet Protocol (IP) connectivity to the base station to offload the particular type of traffic, and
the PDN gateway selection includes, when a split between a PDN-gateway control plane and a PDN-gateway user plane is applied to the local gateway with regard to an Access Point Name (APN) associated with the particular type of traffic, selecting a first control plane node that is located in the core network and has a PDN-gateway control plane.

### (Supplementary note 2)

The mobility management entity according to Supplementary note 1, wherein
the at least one processor is configured to:
send a first control message for triggering a creation of a session regarding the particular type of traffic to a control plane of a packet transfer gateway with the RAN; and
include, in the first control message, a Local Home Network (LHN) ID received from the base station when the split is applied to the local gateway with regard to the APN, and
the LHN ID identifies a Local Home Network (LHN) uniquely within a Public Land Mobile Network (PLMN), wherein the LHN is composed of the local gateway and at least one base station to which the local gateway provides IP connectivity.

### (Supplementary note 3)

The mobility management entity according to Supplementary note 2, wherein the at least one processor is configured to:
perform a Domain Name System (DNS) interrogation for PDN gateway selection by using both the APN and the LHN ID when the split is not applied to the local gateway with regard to the APN; and
perform a DNS interrogation by using the APN, but without using the LHN ID, when the split is applied to the local gateway with regard to the APN.

### (Supplementary note 4)

The mobility management entity according to Supplementary note 2 or 3, wherein the at least one processor is configured to determine, based on the LHN ID and the APN, whether the split is applied to the local gateway with regard to the APN.

### (Supplementary note 5)

The mobility management entity according to Supplementary note 1, wherein the at least one processor is configured to:
send a first control message for triggering a creation of a session regarding the particular type of traffic to a control plane of a packet transfer gateway with the RAN;
include, in the first control message, both an address of the first control plane node as an address of a PDN-gateway control plane and an address of the local gateway as an address of a PDN-gateway user plane when the split is applied to the local gateway with regard to the APN; and
include, in the first control message, the address of the local gateway as an address of a PDN gateway when the split is not applied to the local gateway with regard to the APN.

### (Supplementary note 6)

The mobility management entity according to Supplementary note 5, wherein the at least one processor is configured to, when the split is applied to the local gateway with regard to the APN, select a PDN gateway control plane by performing a first Domain Name System (DNS) interrogation using the APN, but without using a Local Home Network (LHN) ID received from the base station, and select a PDN gateway user plane by performing a second DNS interrogation using both the APN and the LHN ID.

### (Supplementary note 7)

The mobility management entity according to Supplementary note 5, wherein the at least one processor is configured to acquire, by performing a Domain Name System (DNS) interrogation, both an address of the first control plane node as an address of a PDN gateway control plane and an address of the local gateway as an address of a PDN-gateway user plane when the split is applied to the local gateway with regard to the APN.

### (Supplementary note 8)

The mobility management entity according to Supplementary note 1, wherein the at least one processor is configured to:
use, for PDN gateway selection, an address of the local gateway proposed by the base station, instead of performing a Domain Name System (DNS) interrogation, when the split is not applied to the local gateway with regard to the APN; and
perform a DNS interrogation for PDN-gateway control plane selection when the split is applied to the local gateway with regard to the APN.

### (Supplementary note 9)

The mobility management entity according to Supplementary note 8, wherein
the at least one processor is configured to perform a DNS interrogation by using the APN, but without using a Local Home Network (LHN) ID received from the base station, when the split is applied to the local gateway with regard to the APN, and
the LHN ID identifies a Local Home Network (LHN) uniquely within a Public Land Mobile Network (PLMN), wherein the LHN is composed of the local gateway and at least one base station to which the local gateway provides IP connectivity.

### (Supplementary note 10)

The mobility management entity according to Supplementary note 8 or 9, wherein the at least one processor is configured to select a PDN-gateway user plane based on an address of the local gateway proposed by the base station when the split is applied to the local gateway with regard to the APN.

### (Supplementary note 11)

The mobility management entity according to any one of Supplementary notes 8 to 10, wherein the at least one processor is configured to determine, based on an identifier of the base station or the local gateway and based on the APN, whether the split is applied to the local gateway with regard to the APN.

### (Supplementary note 12)

The mobility management entity according to any one of Supplementary notes 8 to 11, wherein the at least one processor is configured to:
send a first control message for triggering a creation of a session regarding the particular type of traffic to a control plane of a packet transfer gateway with the RAN; and
include, in the first control message, both an address of the first control plane node as an address of a PDN-gateway control plane and an address of the local gateway as an address of a PDN-gateway user plane when the split is applied to the local gateway with regard to the APN.

### (Supplementary note 13)

A local gateway located in a Radio Access Network (RAN) including a base station, the local gate way comprising:
at least one memory; and
at least one processor coupled to the at least one memory and configured to:
   provide a Packet Data Network (PDN)-gateway user plane for communicating with an external Packet Data Network (PDN);
   provide Internet Protocol (IP) connectivity to the base station to offload a particular type of traffic; and
   provide a control plane interface for communicating with a control plane node located in a core network, wherein the control plane node has a PDN-gateway control plane and also has a control plane interface for communicating with at least one of a plurality of PCC entities relating to Policy and Charging Control (PCC).

### (Supplementary note 14)

The local gateway according to Supplementary note 13, wherein the at least one processor is configured to receive a PCC rule from the control plane node and execute a Policy and Charging Enforcement Function (PCEF).

### (Supplementary note 15)

The local gateway according to Supplementary note 14, wherein the at least one processor is configured to perform Quality of Service (QoS) control, or charging information collection, or both, for the particular type of traffic to be offloaded in accordance with the PCC rule.

### (Supplementary note 16)

A control plane node located in a core network, the control plane node comprising:
at least one memory; and
at least one processor coupled to the at least one memory and configured to:
   provide a Packet Data Network (PDN)-gateway control plane;
   provide a first control plane interface for communicating with at least one of a plurality of PCC entities relating to Policy and Charging Control (PCC); and
   provide a control plane interface for communicating with a local gateway located in a Radio Access Network (RAN) including a base station, wherein the local gateway comprises a PDN gateway user plane and provides Internet Protocol (IP) connectivity to the base station to offload a particular type of traffic.

### (Supplementary note 17)

The control plane node according to Supplementary note 16, wherein the at least one processor is configured to receive a PCC rule from the at least one PCC entity and send the PCC rule to the local gateway.

### (Supplementary note 18)

The control plane node according to Supplementary note 16 or 17, wherein
the at least one processor is configured to perform, for PDN-gateway user plane selection, a Domain Name System (DNS) interrogation using both an Access Point Name (APN) associated with the particular type of traffic and a Local Home Network (LHN) ID, and thereby select the local gateway, and
the LHN ID identifies a Local Home Network (LHN) uniquely within a Public Land Mobile Network (PLMN), wherein the LHN is composed of the local gateway and at least one base station to which the local gateway provides IP connectivity.

### (Supplementary note 19)

The control plane node according to Supplementary note 18, wherein the at least one processor is configured to:
receive a control message containing the APN and the LHN ID from a control plane of a packet transfer gateway with the RAN; and
in response to the control message, request the local gateway to create a session regarding the particular type of traffic.

### (Supplementary note 20)

The control plane node according to Supplementary note 16 or 17, wherein the at least one processor is configured to:
receive a control message, the control message containing an Access Point Name (APN) associated with the particular type of traffic, an address of the control plane node as an address of a PDN-gateway control plane, and an address of the local gateway as an address of a PDN-gateway user plane; and
in response to the control message, request the local gateway to create a session regarding the particular type of traffic.

### (Supplementary note 21)

A radio communication network comprising:
a first control plane node located in a core network, the first control plane node comprising a Packet Data Network (PDN)-gateway control plane, and the first control plane node configured to provide a first control plane interface for communicating with at least one of a plurality of PCC entities relating to Policy and Charging Control (PCC); and
a local gateway located in a Radio Access Network (RAN) including a base station, the local gateway comprising a PDN gateway user plane, and the local gateway configured to provide Internet Protocol (IP) connectivity to the base station to offload a particular type of traffic and also configured to provide a second control plane interface for communicating with the first control plane node.

### (Supplementary note 22)

The radio communication network according to Supplementary note 21, wherein
the first control plane node is configured to receive a PCC rule from the at least one PCC entity via the first control plane interface, and
the local gateway is configured to receive the PCC rule from the first control plane node via the second control plane interface, and execute a Policy and Charging Enforcement Function (PCEF).

### (Supplementary note 23)

The radio communication network according to Supplementary note 22, wherein the local gateway is configured to perform Quality of Service (QoS) control, or charging information collection, or both, for the particular type of traffic to be offloaded in accordance with to the PCC rule.

### (Supplementary note 24)

The radio communication network according to any one of Supplementary notes 21 to 23, further comprising a mobility management entity located in the core network and configured to:
when a split between a PDN-gateway control plane and a PDN-gateway user plane is not applied to the local gateway with regard to an Access Point Name (APN) associated with the particular type of traffic, perform a Domain Name System (DNS) interrogation for PDN gateway selection by using both the APN and a Local Home Network (LHN) ID received from the base station; and
when the split is applied to the local gateway with regard to the APN, perform a DNS interrogation by using the APN, but without using the LHN ID,
wherein the LHN ID identifies a Local Home Network (LHN) uniquely within a Public Land Mobile Network (PLMN), wherein the LHN is composed of the local gateway and at least one base station to which the local gateway provides IP connectivity.

### (Supplementary note 25)

The radio communication network according to Supplementary note 24, wherein the mobility management entity is configured to determine, based on the LHN ID and the APN, whether the split is applied to the local gateway with regard to the APN.

### (Supplementary note 26)

The radio communication network according to Supplementary note 24 or 25, further comprising a control plane of a packet transfer gateway with the RAN, the control plane of the packet transfer gateway being located in the local gateway or in the core network, wherein
the mobility management entity is configured to send a first control message containing the LHN ID to the control plane of the packet transfer gateway, and
the control plane of the packet transfer gateway is configured to, in response to receiving the first control message, send a second control message containing the LHN ID to the first control plane node.

### (Supplementary note 27)

The radio communication network according to any one of Supplementary notes 24 to 26, wherein the first control plane node is configured to perform, for PDN-gateway user plane selection, a DNS interrogation using the APN and the LHN ID, and thereby select the local gateway.

### (Supplementary note 28)

The radio communication network according to any one of Supplementary notes 24 to 27, wherein the local gateway is a stand-alone gateway and further comprises a user plane of a packet transfer gateway with the RAN.

### (Supplementary note 29)

The radio communication network according to any one of Supplementary notes 21 to 23, further comprising:
a mobility management entity located in the core network; and
a control plane of a packet transfer gateway with the RAN, the control plane of the packet transfer gateway being located in the core network, wherein
the mobility management entity is configured to:
   send a first control message to the control plane of the packet transfer gateway to trigger a creation of a session regarding the particular type of traffic,
   include, in the first control message, an address of the local gateway as an address of a PDN gateway when the split is not applied to the local gateway with regard to an Access Point Name (APN) associated with the particular type of traffic, and
   include, in the first control message, both an address of the first control plane node as an address of a PDN-gateway control plane and an address of the local gateway as an address of a PDN-gateway user plane when the split is applied to the local gateway with regard to the APN.

### (Supplementary note 30)

The radio communication network according to Supplementary note 29, wherein the control plane of the packet transfer gateway is configured to send, to the first control plane node, a second control message containing an address of the local gateway as an address of a PDN-gateway user plane when the first control message contains both the address of the first control plane node as an address of a PDN-gateway control plane and the address of the local gateway as an address of a PDN-gateway user plane.

### (Supplementary note 31)

The radio communication network according to Supplementary note 29 or 30, wherein the mobility management entity is configured to, when the split is applied to the local gateway with regard to the APN, select a PDN-gateway control plane by performing a first Domain Name System (DNS) interrogation using the APN, but without using a Local Home Network (LHN) ID received from the base station, and select a PDN-gateway user plane by performing a second DNS interrogation using both the APN and the LHN ID.

### (Supplementary note 32)

The radio communication network according to Supplementary note 29 or 30, wherein the mobility management entity is configured to acquire, by a Domain Name System (DNS) interrogation, both an address of the first control plane node as an address of a PDN-gateway control plane and an address of the local gateway as an address of a PDN-gateway user plane when the split is applied to the local gateway with regard to the APN.

### (Supplementary note 33)

The radio communication network according to any one of Supplementary notes 29 to 31, wherein the local gateway is a stand-alone gateway and further comprises a user plane of the packet transfer gateway.

### (Supplementary note 34)

The radio communication network according to any one of Supplementary notes 21 to 23, further comprising a mobility management entity located in the core network and configured to:
use, for PDN gateway selection, an address of the local gateway proposed by the base station, instead of performing a Domain Name System (DNS) interrogation, when a split between a PDN-gateway control plane and a PDN-gateway user plane is not applied to the local gateway with regard to an Access Point Name (APN) associated with the particular type of traffic; and
perform a DNS interrogation for PDN-gateway control plane selection when the split is applied to the local gateway with regard to the APN.

### (Supplementary note 35)

The radio communication network according to Supplementary note 34, wherein
the mobility management entity is configured to perform a DNS interrogation by using the APN, but without using a Local Home Network (LHN) ID received from the base station, when the split is applied to the local gateway with regard to the APN, and
the LHN ID identifies a Local Home Network (LHN) uniquely within a Public Land Mobile Network (PLMN), wherein the LHN is composed of the local gateway and at least one base station to which the local gateway provides IP connectivity.

### (Supplementary note 36)

The radio communication network according to Supplementary note 34 or 35, wherein the mobility management entity is configured to select a PDN-gateway user plane based on the address of the local gateway proposed by the base station when the split is applied to the local gateway with regard to the APN.

### (Supplementary note 37)

The radio communication network according to any one of Supplementary notes 34 to 36, wherein the mobility management entity is configured to determine, based on an identifier of the base station or the local gateway and based on the APN, whether the split is applied to the local gateway with regard to the APN.

### (Supplementary note 38)

The radio communication network according to any one of Supplementary notes 34 to 37, further comprising a control plane of a packet transfer gateway with the RAN, the control plane of the packet transfer gateway being located in the core network, wherein
the mobility management entity is configured to send, to the control plane of the packet transfer gateway, a first control message containing both an address of the first control plane node as an address of a PDN-gateway control plane and an address of the local gateway as an address of a PDN-gateway user plane, when the split is applied to the local gateway with regard to the APN, and
the control plane of the packet transfer gateway is configured to, in response to receiving the first control message, send a second control message containing the address of the local gateway as an address of a PDN-gateway user plane to the first control plane node.

### (Supplementary note 39)

The radio communication network according to any one of Supplementary notes 34 to 38, wherein the local gateway is a gateway collocated with the base station and further comprises a user plane of a packet transfer gateway with the RAN.

### Reference Signs List

- 1: User Equipment (UE)
- 10: Radio Access Network (RAN)
- 11: (Home) eNodeB ((H)eNB)
- 12: Stand-alone Gateway (GW)
- 13: Local Serving Gateway (SGW)
- 14: Local Gateway (LGW)
- 20: Evolved Packet Core (EPC)
- 21: Mobility Management Entity (MME)
- 24: Packet Data Network Gateway Control Plane (PGW-C)
- 25: Policy and Charging Rule Function (PCRF)
- 26: Online Charging System (OCS)
- 27: Offline Charging System (OFCS)
- 28: Serving Gateway (SGW)
- 1402: Processor
- 1403: Memory

## Claims

1. A mobility management entity located in a core network, the mobility management entity comprising:
at least one memory; and
at least one processor coupled to the at least one memory and configured to perform Packet Data Network (PDN)-gateway selection during a session establishment procedure for a particular type of traffic to be offloaded at a local gateway, wherein
the local gateway is located in a Radio Access Network (RAN) including a base station, has a PDN-gateway user plane, and is configured to provide Internet Protocol (IP) connectivity to the base station to offload the particular type of traffic, and
the PDN gateway selection includes, when a split between a PDN-gateway control plane and a PDN-gateway user plane is applied to the local gateway with regard to an Access Point Name (APN) associated with the particular type of traffic, selecting a first control plane node that is located in the core network and has a PDN-gateway control plane.

2. The mobility management entity according to Claim 1, wherein
the at least one processor is configured to:
send a first control message for triggering a creation of a session regarding the particular type of traffic to a control plane of a packet transfer gateway with the RAN; and
include, in the first control message, a Local Home Network (LHN) ID received from the base station when the split is applied to the local gateway with regard to the APN, and
the LHN ID identifies a Local Home Network (LHN) uniquely within a Public Land Mobile Network (PLMN), wherein the LHN is composed of the local gateway and at least one base station to which the local gateway provides IP connectivity.

3. The mobility management entity according to Claim 2, wherein the at least one processor is configured to:
perform a Domain Name System (DNS) interrogation for PDN gateway selection by using both the APN and the LHN ID when the split is not applied to the local gateway with regard to the APN; and
perform a DNS interrogation by using the APN, but without using the LHN ID, when the split is applied to the local gateway with regard to the APN.

4. The mobility management entity according to Claim 1, wherein the at least one processor is configured to:
use, for PDN gateway selection, an address of the local gateway proposed by the base station, instead of performing a Domain Name System (DNS) interrogation, when the split is not applied to the local gateway with regard to the APN; and
perform a DNS interrogation for PDN-gateway control plane selection when the split is applied to the local gateway with regard to the APN.

5. The mobility management entity according to Claim 4, wherein
the at least one processor is configured to perform a DNS interrogation by using the APN, but without using a Local Home Network (LHN) ID received from the base station, when the split is applied to the local gateway with regard to the APN, and
the LHN ID identifies a Local Home Network (LHN) uniquely within a Public Land Mobile Network (PLMN), wherein the LHN is composed of the local gateway and at least one base station to which the local gateway provides IP connectivity.

6. A method in a mobility management entity located in a core network, the method comprising:
performing Packet Data Network (PDN)-gateway selection during a session establishment procedure for a particular type of traffic to be offloaded at a local gateway, wherein
the local gateway is located in a Radio Access Network (RAN) including a base station, has a PDN-gateway user plane, and is configured to provide Internet Protocol (IP) connectivity to the base station to offload the particular type of traffic, and
the PDN gateway selection includes, when a split between a PDN-gateway control plane and a PDN-gateway user plane is applied to the local gateway with regard to an Access Point Name (APN) associated with the particular type of traffic, selecting a first control plane node that is located in the core network and has a PDN-gateway control plane.

7. A non-transitory computer readable medium storing a program for causing a computer to perform a method in a mobility management entity located in a core network, wherein the method comprises:
performing Packet Data Network (PDN)-gateway selection during a session establishment procedure for a particular type of traffic to be offloaded at a local gateway, wherein
the local gateway is located in a Radio Access Network (RAN) including a base station, has a PDN-gateway user plane, and is configured to provide Internet Protocol (IP) connectivity to the base station to offload the particular type of traffic, and
the PDN gateway selection includes, when a split between a PDN-gateway control plane and a PDN-gateway user plane is applied to the local gateway with regard to an Access Point Name (APN) associated with the particular type of traffic, selecting a first control plane node that is located in the core network and has a PDN-gateway control plane.

8. A local gateway located in a Radio Access Network (RAN) including a base station, the local gate way comprising:
at least one memory; and
at least one processor coupled to the at least one memory and configured to:
provide a Packet Data Network (PDN)-gateway user plane for communicating with an external Packet Data Network (PDN);
provide Internet Protocol (IP) connectivity to the base station to offload a particular type of traffic; and
provide a control plane interface for communicating with a control plane node located in a core network, wherein the control plane node has a PDN-gateway control plane and also has a control plane interface for communicating with at least one of a plurality of PCC entities relating to Policy and Charging Control (PCC).

9. The local gateway according to Claim 8, wherein the at least one processor is configured to receive a PCC rule from the control plane node and execute a Policy and Charging Enforcement Function (PCEF).

10. The local gateway according to Claim 9, wherein the at least one processor is configured to perform Quality of Service (QoS) control, or charging information collection, or both, for the particular type of traffic to be offloaded in accordance with the PCC rule.

11. A method in a local gateway located in a Radio Access Network (RAN) including a base station, the method comprising:
providing a Packet Data Network (PDN)-gateway user plane for communicating with an external Packet Data Network (PDN);
providing Internet Protocol (IP) connectivity to the base station to offload a particular type of traffic; and
providing a control plane interface for communicating with a control plane node located in a core network, wherein the control plane node has a PDN-gateway control plane and also has a control plane interface for communicating with at least one of a plurality of PCC entities relating to Policy and Charging Control (PCC).

12. A non-transitory computer readable medium storing a program for causing a computer to perform a method in a local gateway located in a Radio Access Network (RAN) including a base station, wherein the method comprises:
providing a Packet Data Network (PDN)-gateway user plane for communicating with an external Packet Data Network (PDN);
providing Internet Protocol (IP) connectivity to the base station to offload a particular type of traffic; and
providing a control plane interface for communicating with a control plane node located in a core network, wherein the control plane node has a PDN-gateway control plane and also has a control plane interface for communicating with at least one of a plurality of PCC entities relating to Policy and Charging Control (PCC).

13. A control plane node located in a core network, the control plane node comprising:
at least one memory; and
at least one processor coupled to the at least one memory and configured to:
provide a Packet Data Network (PDN)-gateway control plane;
provide a first control plane interface for communicating with at least one of a plurality of PCC entities relating to Policy and Charging Control (PCC); and
provide a control plane interface for communicating with a local gateway located in a Radio Access Network (RAN) including a base station, wherein the local gateway comprises a PDN gateway user plane and provides Internet Protocol (IP) connectivity to the base station to offload a particular type of traffic.

14. The control plane node according to Claim 13, wherein the at least one processor is configured to receive a PCC rule from the at least one PCC entity and send the PCC rule to the local gateway.

15. The control plane node according to Claim 13 or 14, wherein
the at least one processor is configured to perform, for PDN-gateway user plane selection, a Domain Name System (DNS) interrogation using both an Access Point Name (APN) associated with the particular type of traffic and a Local Home Network (LHN) ID, and thereby select the local gateway, and
the LHN ID identifies a Local Home Network (LHN) uniquely within a Public Land Mobile Network (PLMN), wherein the LHN is composed of the local gateway and at least one base station to which the local gateway provides IP connectivity.

16. The control plane node according to Claim 15, wherein the at least one processor is configured to:
receive a control message containing the APN and the LHN ID from a control plane of a packet transfer gateway with the RAN; and
in response to the control message, request the local gateway to create a session regarding the particular type of traffic.

17. The control plane node according to Claim 13 or 14, wherein the at least one processor is configured to:
receive a control message, the control message containing an Access Point Name (APN) associated with the particular type of traffic, an address of the control plane node as an address of a PDN-gateway control plane, and an address of the local gateway as an address of a PDN-gateway user plane; and
in response to the control message, request the local gateway to create a session regarding the particular type of traffic.

18. A method in a control plane node located in a core network, the method comprising:
providing a Packet Data Network (PDN)-gateway control plane;
providing a first control plane interface for communicating with at least one of a plurality of PCC entities relating to Policy and Charging Control (PCC); and
providing a control plane interface for communicating with a local gateway located in a Radio Access Network (RAN) including a base station, wherein the local gateway comprises a PDN gateway user plane and provides Internet Protocol (IP) connectivity to the base station to offload a particular type of traffic.

19. A non-transitory computer readable medium storing a program for causing a computer to perform a method in a control plane node located in a core network, wherein the method comprises:
providing a Packet Data Network (PDN)-gateway control plane;
providing a first control plane interface for communicating with at least one of a plurality of PCC entities relating to Policy and Charging Control (PCC); and
providing a control plane interface for communicating with a local gateway located in a Radio Access Network (RAN) including a base station, wherein the local gateway comprises a PDN gateway user plane and provides Internet Protocol (IP) connectivity to the base station to offload a particular type of traffic.

20. A radio communication network comprising:
a first control plane node located in a core network, the first control plane node comprising a Packet Data Network (PDN)-gateway control plane, and the first control plane node configured to provide a first control plane interface for communicating with at least one of a plurality of PCC entities relating to Policy and Charging Control (PCC); and
a local gateway located in a Radio Access Network (RAN) including a base station, the local gateway comprising a PDN gateway user plane, and the local gateway configured to provide Internet Protocol (IP) connectivity to the base station to offload a particular type of traffic and also configured to provide a second control plane interface for communicating with the first control plane node.
